(19) Europäisches Patentamt
European Patent Office
Office européen des brevets

(11) **EP 2 354 949 A1**

(12) **EUROPÄISCHE PATENTANMELDUNG**

(43) Veröffentlichungstag:
**10.08.2011 Patentblatt 2011/32**

(51) Int Cl.:
*G06F 11/36* (2006.01)    *G06F 9/48* (2006.01)
*G06F 17/50* (2006.01)

(21) Anmeldenummer: **10152107.8**

(22) Anmeldetag: **29.01.2010**

(84) Benannte Vertragsstaaten:
**AT BE BG CH CY CZ DE DK EE ES FI FR GB GR HR HU IE IS IT LI LT LU LV MC MK MT NL NO PL PT RO SE SI SK SM TR**
Benannte Erstreckungsstaaten:
**AL BA RS**

(71) Anmelder: **Inchron GmbH**
**14482 Potsdam (DE)**

(72) Erfinder:
• **Münzenberger, Ralf**
**91052 Erlangen (DE)**
• **Albers, Karsten**
**82362 Weilheim (DE)**

(74) Vertreter: **Vossius & Partner**
**Siebertstrasse 4**
**81675 München (DE)**

(54) **Verfahren zur Analyse des zeitlichen Verhaltens des Datenflusses von verteilten, eingebetteten Systemen**

(57) Die Erfindung betrifft eine Verfahren zur Analyse des zeitlichen Verhaltens von eingebetteten Systemen, wobei das eingebettete System mehrere Verarbeitungsschritte (Tasks) aufweist, wobei durch die Verarbeitungsschritte zumindest teilweise Daten verarbeitet werden, wobei die Verarbeitung mindestens eines Datums durch mehrere Verarbeitungsschritte erfolgt, wobei zumindest zwei dieser Verarbeitungsschritte eine feste Reihenfolge haben, wobei mindestens einer Task ein Wirkkettenelement zugeordnet wird, wobei Tasks den Kontrollfluss und das Wirkkettenelement den Datenfluss repräsentieren, wobei mindestens einem ersten Wirkkettenelement W1 (Vorgängerwirkkettenelement) ein zweites Wirkkettenelement W2 (Nachfolgerwirkkettenelement) zugeordnet wird, wobei die Zuordnung den Datenfluss vom Vorgängerwirkkettenelement zum Nachfolgerwirkkettenelement modelliert, wobei mindestens zwei Tasks T1, T2 jeweils mindestens ein Wirkkettenelement W1, W2 zugeordnet wird, gekennzeichnet durch die Schritte, Bestimmung von Zeitbeschreibungsmitteln für die von Task T1 verbrauchte Kapazität für mindestens ein Zeitintervall I, wobei Zeitbeschreibungsmittel für die eingehende Kapazität von Task T1 und Zeitbeschreibungsmittel für die eingehenden Aktivierungen von Task T1 verwendet werden, und Bestimmung von Zeitbeschreibungsmittel für die eingehende Kapazität von Wirkkettenelement W1 von Task T1 für mindestens ein Zeitintervall I', wobei hierfür die Zeitbeschreibungsmittel für die verbrauchte Kapazität von Task T1 verwendet werden.

Fig. 1

EP 2 354 949 A1

## Beschreibung

Die Erfindung betrifft ein Verfahren zur Analyse des zeitlichen Verhaltens des Datenflusses von verteilten, eingebetteten Systemen, insbesondere Computersystemen.

Solche Systeme bestehen aus einer Vielzahl von Komponenten in Form von Programmmodulen, den sogenannten Tasks und/oder elektronischen Schaltungsmodulen.

Eine Task wiederum besteht aus Ausführungsabschnitten. Ein Ausführungsabschnitt kann das Ausführen eines Wirkkettenelementes modellieren.

In einem eingebetteten System werden Eingangsdaten verarbeitet und schrittweise in Ausgangsdaten transformiert. Dies geschieht in einer Reihe von Verarbeitungsschritten (Tasks). Die Verarbeitungsschritte werden im eingebetteten System im Kontext einer Ausführungsvorschrift ausgeführt. Tasks können dabei von anderen Tasks, deren Daten sie weiterverarbeiten, aktiviert werden. Einer aktivierten Tasks wird sodann vom System nach einem bestimmten Ablaufplan oder mit bestimmtem Ablaufregeln (Schedule) Verarbeitungsmittel wie Prozessorzeit für ihre Abarbeitung zugewiesen und die Abarbeitung erfolgt dann im Rahmen der zugewiesenen Verarbeitungsmittel und Zeiten. Die Aktivierung einer Task kann aber auch nach einem festen Schema oder ohne Übergabe von Daten erfolgen.

In diesem Fall, aber auch sonst, kann eine Task während ihrer Ausführung auf (weitere) Daten zugreifen, welche beispielsweise in einem gemeinsamen Speicher abgelegt sind. Eine andere Möglichkeit ist, dass die Daten bei einer anderen zweiten Task oder beim System aktiv von der ersten Task angefordert werden muss. Dies ist beispielsweise der Fall wenn die Daten aus einer Queue oder einem Stack gelesen und bei jedem Lesen ein anderes (neues) Datum übergeben wird.

Eine Übergabe der Daten bei der Aktivierung der Task wird im folgenden als synchroner Zugriff, ein Zugriff während der Verarbeitung als asynchroner Zugriff bezeichnet.

Eine Wirkkette beschreibt den Verarbeitungsprozess eines Datums oder eine Menge von Daten in einem System. Eine Menge von Eingangsdaten wird durch eine Reihen von Verarbeitungsschritten (Tasks) schrittweise in eine Menge von Ausgangsdaten transformiert. Diese Mengen können auch jeweils nur aus einem Element bestehen.

Ein Beispiel einer Wirkkette ist eine Verbrennungsmotorsteuerung, bei der durch den Einsatz eines Sensors die Motorposition bestimmt wird und in mehreren Verarbeitungsschritten der Einspritzzeitpunkt, die Einspritzmenge und der Zündzeitpunkt ermittelt und an den Aktuator übermittelt wird. Sensor und Aktuator können an unterschiedliche Steuergeräte angeschlossen sein und die Verarbeitungsschritte können auf einem aber auch mehreren Steuergeräten implementiert sein.

In vielen eingebetteten System ist es wichtig, dass die Verarbeitung einer Wirkkette in einem bestimmtem Zeitfenster abgeschlossen und das Ergebnis bereitgestellt wird.

Die Weitergabe der Daten in der Wirkkette kann einerseits dabei durch eine synchronen Zugriff einer Task auf die Ergebnisse ihrer Vorgängertask in der Wirkkette erfolgen, d.h. die Vorgängertask aktiviert die Nachfolgetask und übergibt dabei die benötigten Daten (bzw. stellt sie für eine Zugriff bereit). Andererseits kann eine Nachfolgetask auch nicht von der Vorgängertask sondern anderweitig aktiviert werden und die Daten werden von der Vorgängertask asynchron bereitgestellt.

In der Echtzeitanalyse wird meist die synchrone Situation betrachtet, die asynchrone Situation wirft unter Umständen Probleme auf.

Ein Problem dabei ist beispielsweise die Situation so zu modellieren, dass eine effiziente und möglichst genaue Echtzeitanalyse möglich ist.

Für die Bestimmung der Echtzeiteigenschaften von eingebetteten Systemen sind insbesondere auch die Echtzeiteigenschaften von Wirkketten interessant. Mögliche Fragestellungen sind dabei die maximalen und minimalen Antwortzeiten von Daten beim Durchlaufen der Wirkkette oder Teile davon, oder das maximale oder minimale Alter von Daten nach ihrer Abarbeitung durch eine Wirkkette oder Teile davon. Weiter Fragestellungen sind, ob Daten bei der Abarbeitung in der Wirkkette verloren gehen bzw. von nachfolgenden Daten überschrieben werden können. Dies ist beispielsweise der Fall wenn ein Wirkkettenelement für einzelne Zeitabschnitte häufiger aktiviert als abgearbeitet wird. Dann können Aktivierungen durch nachfolgende Aktivierungen verdrängt werden und können, je nach konkreter Ausgestaltung des eingebetteten Systems, auch verloren gehen. Besonders interessant ist auch, wie oft eine solche Situation hintereinander auftreten kann. Aber auch die Frage, ob Daten von einem Wirkkettenelement mehrfach (nacheinander) abgearbeitet werden, ist für die Optimierung oder in bestimmten Fällen für die korrekte Funktionalität eines eingebetteten Systems relevant.

Erfindungsgemäß wird ein Verfahren zur Analyse des zeitlichen Verhaltens von eingebetteten Systemen gemäß Anspruch 1 bereitgestellt.

Vorzugsweise weist das erfindungsgemäße Verfahren einen Schritt zum Bestimmung von Zeitbeschreibungsmitteln für die Bereitstellung neuer Daten für Wirkkettenelement W2 von Task 2 unter Verwendung von Zeitbeschreibungsmitteln für die Bereitstellung von Daten für Wirkkettenelement W1 und Zeitbeschreibungsmittel für die eingehende Kapazität von W1.

Es ist bevorzugt, dass mindestens einer Task mindestens zwei Wirkkettenelemente zugeordnet sind und Zeitbeschreibungsmittel für zumindest diese Wirkkettenelemente gemäß dem Verfahren von Anspruch 1 bestimmt werden, wobei mindestens beiden Wirkkettenelementen jeweils ein Teil der von der Task verbrauchten Kapazität als verfügbare Kapazität zugeordnet wird.

Die Zeitbeschreibungsmittel für die von Task T1 verbrauchte Kapazität werden vorzugsweise für mindestens ein Zeitintervall I bestimmt. Weiter vorzugsweise werden die Zeitbeschreibungsmittel für die für Wirkkettenelement W1 verfügbare Kapazität für mindestens ein Zeitintervall I' bestimmt.

Es ist ferner bevorzugt, dass mindestens einer ersten Task T1 (1), die eine Vorgängertask darstellt, eine zweite Task T2 (2) als Nachfolgertask zugeordnet ist, womit eine Aktivierung der Nachfolgertask durch die Vorgängertask modelliert wird, wobei der Task T1 mindestens ein Wirkkettenelement W1 und der Task T2 mindestens ein Wirkkettenelement W2 zugeordnet wird. Bei dem erfindungsgemäßen Verfahren wird vorzugsweise mindestens ein Wirkkettenelement asynchron aktiviert.

Es ist ferner bevorzugt, dass mindestens eine Wirkkette Wk mit mindestens zwei Wirkkettenelementen W1 und W2 vorgesehen ist, wobei Wirkkettenelement W1 als Vorgänger von Wirkkettenelement W2 in der Wirkkette Wk ausgestaltet ist, wobei Wirkkettenelement W1 einer Task T1 zugeordnet und Wirkkettenelement W2 einer Task T2 zugeordnet ist und T1 nicht T2 zugeordnet ist. Vorzugsweise wird für mindestens eine Wirkkette eine Antwortzeit bestimmt. Es ist ferner bevorzug, dass für mindestens eine Wirkkette sowohl eine maximale als auch eine minimale Antwortzeit bestimmt wird.

Einer Task sind vorzugsweise neben Wirkkettenelementen zusätzliche Abschnitte zugeordnet und diese Abschnitte beschreiben sonstigen Kapazitätsverbrauch der Task.

Bevorzugt ist mindestens zwei zu einer Task zugeordneten Wirkkettenelementen und/oder Abschnitten eine Reihenfolge zugewiesen.

Zur Modellierung des Systems werden vorzugsweise mindestens zwei Typen von Elementen verwendet (Tasks und Wirkkettenelemente).

Es ist ferner bevorzugt, mindestens einem Abschnitt einer Task eine Häufigkeitsbeschreibung zuzuordnen. Ferner ist ein Wirkkettenelement W1 einer Task T1 zugeordnet, mit einem Schritt Bestimmung der Häufigkeitsbeschreibung für W1 unter Verwendung der Aktivierungsbeschreibungen von W1 und T1. es ist außerdem bevorzugt, dass mindestens ein Häufigkeitsbeschreibungsmittel mit mindestens einer Periode ausgestaltet wird. Mindestens ein Häufigkeitsbeschreibungsmittel ist ferner vorzugsweise mit einem Offset, mit einer Periode und einem Offset, und/oder mit einer intervallbasierten Beschreibung ausgestaltet.

Es ist bevorzugt, dass mindestens ein Zeitbeschreibungsmittel mit einer auf Intervallen basierenden Beschreibung ausgestaltet ist.

Es ist auch bevorzugt, dass mindestens ein Zeitbeschreibungsmittel mit einer auf Intervallen basierenden Beschreibung ausgestaltet ist welche für mindestens zwei Intervalle Bedarfsinformationen beinhaltet.

Bedarfsinformationen sind teilweise (a) als Menge von Ereignissen, (b) als Rechenzeit, (c) als minimale Menge von Ereignissen, (d) als minimale Rechenzeit, (e) als maximale Menge von Ereignissen, und/oder (f) als maximale Rechenzeit ausgestaltet.

Mindestens ein Zeitbeschreibungsmittel ist vorzugsweise mit einer (a) auf Intervallen basierenden Beschreibung als auch mit einem Offset, (b) auf Intervallen basierenden Beschreibung als auch mit einem Offset und einer Periode, und/oder (c) auf Intervall basierenden Beschreibung als auch mit einem Offset, einer Periode und einen Jitter ausgestaltet.

Offset, Periode und Jitter sind vorzugsweise als numerische Werte ausgestaltet.

Bei dem erfindungsgemäßen Verfahren weist das eingebettete System mehrere Verarbeitungsschritte (Tasks) auf. Dabei werden durch die Verarbeitungsschritte zumindest teilweise Daten verarbeitet, wobei die Verarbeitung mindestens eines Datums durch mehrere Verarbeitungsschritte erfolgt. Zumindest zwei dieser Verarbeitungsschritte haben eine feste Reihenfolge.

Mindestens einer Task wird ein Wirkkettenelement zugeordnet, wobei Tasks den Kontrollfluss und das Wirkkettenelement den Datenfluss repräsentieren. Dabei wird mindestens einem ersten Wirkkettenelement W1 (einem Vorgängerwirkkettenelement) ein zweites Wirkkettenelement W2 (ein Nachfolgerwirkkettenelement) zugeordnet. Die Zuordnung modelliert den Datenfluss vom Vorgängerwirkkettenelement zum Nachfolgerwirkkettenelement. Mindestens zwei Tasks T1, T2 wird jeweils mindestens ein Wirkkettenelement W1, W2 zugeordnet.

Erfindungsgemäß erfolgt die Bestimmung von Zeitbeschreibungsmitteln für die von Task T1 verbrauchte Kapazität für mindestens ein Zeitintervall I, wobei Zeitbeschreibungsmittel für die eingehende Kapazität von Task T1 und Zeitbeschreibungsmittel für die eingehenden Aktivierungen von Task T1 verwendet werden. Ferner erfolgt erfindungsgemäß eine Bestimmung von Zeitbeschreibungsmittel für die eingehende Kapazität von Wirkkettenelement W1 von Task T1 für mindestens ein Zeitintervall I', wobei hierfür die Zeitbeschreibungsmittel für die verbrauchte Kapazität von Task T1 verwendet werden.

In einem erfindungsgemäßen Verfahren zur Echtzeitanalyse werden einerseits Tasks und ihre Aktivierung und separat davon die Wirkkettenelemente und ihre Verarbeitungsreihenfolge modelliert. Dabei wird mindestens eine Wirkkette modelliert von der mindestens zwei Wirkkettenelemente jeweils einer Task zugewiesen werden. Bei der Echtzeitanalyse werden Echtzeiteigenschaften für mindestens eine Task und eine Wirkkette bestimmt. Denkbare Echtzeiteigenschaften sind dabei die minimale und maximale Antwortzeit (bzw. eine obere und/oder untere Schranke hierfür) sowie eine Schranke für die minimale und maximale Dichte der von einer Task ausgehenden Aktivierungen. Es wird zur Bestimmung der Echtzeiteigenschaften zumindest einer Task A nicht auf die Beschreibung der zeitliche Aktivierungen eines zur Task A gehörenden Wirkkettenelementes verwendet, wohingegen zur Bestimmung der Echtzeiteigenschaften des Wirkkettenelementes bzw. der Wirkkette auf die zeitlichen Eigenschaften der zum Wirkkettenelement gehörigen Tasks zugegriffen wird.

Vorteilhaft ist die Erfindung insbesondere für Systeme bei denen mindestens eine Task zumindest teilweise asynchron auf die für die vom Wirkketten benötigten Daten zugreift.

In einer vorteilhaften Ausgestaltung der Erfindung wird für mindestens eine Task und für mindestens ein dieser Task zugeordnetes Wirkkettenelement die verfügbare Kapazität dieses Wirkkettenelementes beschrieben.

Diese Kapazität wird mindestens aus den in die Task eingehenden Ereignisdichten und der für die Task verfügbaren Kapazität ermittelt. Vorteilhaft ist es, wenn diese in ein Wirkkettenelement eingehende Kapazität unabhängig von der in die Wirkketten eingehenden Ereignisdichte bestimmt wird.

Die für ein Wirkkettenelement verfügbare Kapazität entspricht dabei der für die zugeordneten Task verwendeten Kapazität bzw. eines Teiles davon. Die Ermittlung der für eine Task verwendeten Kapazität erfolgt dabei durch Verrechnung der für die Task verfügbaren Kapazität, die Beschreibung der in die Task eingehenden Ereignisse und die von der Task benötigten Rechenzeiten.

In einem ersten Schritt wird aus der Zeitbeschreibung der in die Task eingehenden Ereignisse und der von der Task benötigten Rechenzeiten für diese Ereignisse die für die Task insgesamt benötigten Rechenzeit bestimmt.

In einem zweiten Schritt wird diese von der Task benötigte Rechenzeit mit der verfügbaren Kapazität für die Task in Beziehung gesetzt und damit bestimmt, in welchem Zeitbereich die Task ausgeführt wird. Die für ein Wirkkettenelement maximal verfügbare Kapazität ergibt sich somit aus dem Zusammenspiel zwischen der für die Task benötigten Rechenzeit und der für die Task verfügbaren Kapazität.

Sie kann beispielsweise auch durch eine Differenz der in eine Task eingehenden Kapazität und der nach Abarbeitung der Task noch verbleibenden Kapazität ermittelt werden.

Eine geringere Dichte von eingehenden Ereignissen der Task führt dabei zu einer geringeren verfügbaren Kapazität für die Wirkkettenelemente der Task, eine geringere verfügbare Kapazität für die Task kann wiederum zu einer geringeren verfügbaren Kapazität der Wirkkettenelemente führen.

Die verfügbare Kapazität der Task kann sich auf mehrere der Task zugeteilten Wirkkettenelemente aber auch auf sonstige Kosten der Task, welche durch keine Wirkkettenelemente repräsentiert werden, aufteilen.

Für die Berechnung der verfügbaren Kapazität für ein Wirkkettenelement werden dann lediglich die Teile der Rechenzeit einer Task herangezogen, welche auf das Wirkkettenelement entfallen. Dabei wird berücksichtigt auf welchen Teil der verfügbaren Kapazität diese Teile der Rechenzeit der Task fallen.

Die Abschnitte der Task, welche keinem Wirkkettenelement zugeordnet sind, können auch Overheadzeiten des Betriebssystems oder des Prozessors beinhalten.

Für die einzelnen Wirkkettenelemente und die Abschnitte der Task, welche keinem Wirkkettenelement zugeordnet sind, kann eine Ordnung oder eine feste Reihenfolge vorgegeben werden.

Dies entspräche beispielsweise der Reihenfolge, in der die Wirkkettenelemente und Abschnitte in einer Task abgearbeitet werden.

In einer vorteilhaften Ausführungsform können Wirkkettenelementen auch keine Ausführungszeit zugeordnet werden. Dann wird die verfügbare Kapazität für diese Elemente in eine Anzahl von Ereignisse als Einheit beschrieben, beispielsweise wird angegeben wie oft das Wirkkettenelement in bestimmten Intervallen maximal bzw. minimal verarbeitet werden kann. Dabei spielt wiederum die Position des Wirkkettenelementes in der Reihenfolge der einzelnen Abschnitte der Task eine entscheidende Rolle. So ist die verfügbare Kapazität des Wirkkettenelementes beispielsweise solange null bis in der für die Task verwendeten Kapazität das Wirkkettenelement erreicht ist.

Um die maximale bzw. minimale verfügbare Kapazität eines Wirkkettenelementes W zu bestimmen, spielen nicht nur die Anregungen der zu W gehörigen Task T und die verfügbare Kapazität für T eine Rolle, sondern insbesondere auch die anderen Wirkkettenelemente und sonstigen Abschnitte der Task T. Zwar ändert sich, wenn W von den anderen Wirkkettenelementen und den sonstigen Abschnitten von T unabhängig ist, außer in Extremfällen, nichts an der langfristig für W verfügbare Kapazität. Die Kapazität kann früher, d.h. in kürzeren Intervallen oder später d.h. erst in längeren Intervallen zur Verfügung stehen.

Längere Ausführungszeiten für die anderen Wirkkettenelemente und die sonstigen Abschnitte von T führen zu einer späteren Verfügbarkeit der Kapazitäten, kürzere Ausführungszeiten zu einer früheren Verfügbarkeit der Kapazitäten.

Insbesondere relevant sind dabei diejenigen Abschnitte und Wirkkettenelement, welche beim Ablauf von T aufgrund der Reihenfolge der Abschnitte und Wirkkettenelement vor W ausgeführt werden. Benötigen diese eine geringere Ausführungszeit, so verringert sich die Zeit die von der Aktivierung von T bis zur Bereitstellung von Kapazität für W verstreicht. Benötigen die am Anfang von T abzuarbeitenden Abschnitte und Wirkkettenelement eine längere Ausführungszeit, so erhöht sich die Zeit, die von einer Aktivierung von T bis zur Bereitstellung von Kapazität für W vergeht.

Abschnitte und Wirkkettenelement welche in der Ausführungsreihenfolge der Task nach dem Wirkkettenelement W abgearbeitet werden sind insbesondere in solche Fällen relevant, in denen eine Ausführung der Task T durch eine vorhergehende Ausführung von T verzögert werden kann. Eine Ausführung einer Task wird im Folgenden als Instanz der Task bezeichnet. Diese initiale Verzögerung von T durch eine vorhergehende Instanz von T hängt von den Ausführungszeiten der vorherigen Instanz und damit insbesondere auch von den Ausführungszeiten der nach W abzuarbeitenden Abschnitte und Wirkkettenelementen ab.

Die benötigten Rechenzeiten können dabei einen festen Wert pro eingehendes Ereignis der Task haben, oder sie können unterschiedliche kumulierte Werte je nach Anzahl von aufeinanderfolgenden Ereignissen haben.

Eine vorteilhafte Ausführungsform ist, wenn die Rechenzeiten aus den Wirkkettenelementen und insbesondere unter Verwendung der in diese eingehenden Ereignisse bestimmt wird.

Wirkkettenelementen können unterschiedliche Ausführungszeiten zugeordnet werden. Damit können schwankende Ausführungszeiten für Abschnitte und Wirkkettenelemente modelliert werden.

Eine vorteilhafte Variante ist dabei, wenn eine lange Ausführungszeit für einen Abschnitt bzw. ein Wirkkettenelement A nicht in derselben Instanz der Task T auftreten kann, wie eine lange Ausführungszeit eines Abschnittes bzw. Wirkkettenelementes B. Dann kann in eine maximale Ausführungszeit für T nicht sowohl die lange Ausführungszeit für A als auch die lange Ausführungszeit für B eingehen. Im Ergebnis ist somit die maximale Ausführungszeit von T geringer als die Summe der maximalen Ausführungszeiten der einzelnen Abschnitte und Wirkkettenelemente.

In einer vorteilhaften Ausgestaltung des Verfahrens können Abschnitten in der Task Häufigkeitsbeschreibungsmittel zugeordnet werden. Ein Häufigkeitsbeschreibungsmittel beschreibt dabei wie oft und nach welchem Muster ein Abschnitt in aufeinanderfolgenden Instanzen einer Task ausgeführt wird.

Eine Möglichkeit der Ausgestaltung von Häufigkeitsbeschreibungsmittel ist einem Abschnitt eine Periode und ein Offset zuzuordnen. Die Periode gibt dabei an wie vielen Instanzen der Task zwischen zwei Ausführungen des Abschnittes liegen. Ist einem Abschnitt A beispielsweise die Periode 5 zugeordnet, so heißt dies, dass in jeder 5ten Instanz der Task der Abschnitt A ausgeführt wird und entsprechend Verarbeitungskapazität der Task benötigt. In den dazwischen liegenden Instanzen wird der Abschnitt A in der Task nicht ausgeführt.

Der Offset gibt, bezüglich einer bestimmten Instanz der Task als Basis, an, nach wie vielen Instanzen eine (erste) Ausführung des Abschnittes erfolgt. Ist dem Abschnitt A beispielsweise ein Offset von 2 zugeordnet, so erfolgt eine Ausführung in der 3ten Instanz der Task nach der gemeinsamen Basis und die weiteren Ausführungen dann jeweils nach 5 weiteren Instanzen also in der 8ten, 13ten, 18ten usw. Instanz. Ein Offset 0 würde eine Ausführung in der ersten Instanz der Task bewirken. Die konkrete Ausgestaltung des Offsets kann aber auch anders erfolgen, beispielsweise indem ein Offset 1 der 1ten Instanz der Task zugeordnet wird.

Der Offset dient vornehmlich dazu, die Ausführungen von mehreren Abschnitten auf verschiedene Instanzen einer Task zu verteilen und somit zu verhindern, dass viele lange Ausführungszeiten in eine Instanz dieser Task zusammentreffen. Dies begrenzt wiederum die Gesamtausführungszeit für die Task.

Können Ausführungen ein oder mehrere Instanzen der Task früher oder später auftreten, so kann diese Schwankung über einen Jitter modelliert werden. Insbesondere bis Werten für den Jitter, welche eine Periode überschreiten kann es sinnvoll sein, zusätzlich einen Mindestabschnitt zwischen zwei aufeinanderfolgenden Instanzen, in denen eine Ausführung des Abschnittes A erfolgen kann, anzugeben.

Periode, Offset und Jitter und Mindestabstand können als numerische Werte ausgestaltet werden.

In vorteilhafte Ausführungsformen können weiter fortgeschrittene Ereignismodelle wie Ereignisströme, hierarchische Ereignisströme gemäß WO 2008/003427 für die Häufigkeitsbeschreibungsmittel verwendet werden. Dadurch ist eine noch genauere Modellierung von unregelmäßigen Auftrittsmustern möglich.

In einer weiteren vorteilhaften Ausgestaltung werden zusätzlich zu den Ereignismodellen mindestens ein Offset und eine Periode aufgeführt. Dadurch kann das Zusammentreffen vieler langer Ausführungszeiten in einer Instanz der Task für die Analyse einfach ausgeschlossen werden.

Alternativ oder zusätzlich können Periode und Offset auch einzelnen Ausführungszeiten von Abschnitten zugeordnet werden.

Insbesondere interessant ist es auch, einem Wirkkettenelement unterschiedliche Zeiten zuzuordnen für die Fälle, dass neue Daten im Wirkkettenelement verarbeitet werden oder nicht.

Dafür können in einem Schritt einer vorteilhaften Ausgestaltung des Verfahrens die Häufigkeitsbeschreibungsmittel aus einer Korrelation der die Aktivierungen des Wirkkettenelement beschreibenden Zeitbeschreibungen mit den die Aktivierung der Task beschreibenden Zeitbeschreibungen gewonnen werden. Dazu werden sinnvollerweise für die Beschreibungen der Aktivierungen die gleichen Zeitbeschreibungsmittel gewählt. Alternativ können verschiedene Zeitbeschreibungsmittel in ein Zeitbeschreibungsmittel konvertiert werden.

Eine konkrete Ausgestaltung der Korrelation wird im folgenden für ein einfaches Zeitbeschreibungsmodell mit Periode und Offset und ein resultierendes Häufigkeitsbeschreibungsmodell ebenfalls mit Periode und Offset näher beschrieben. Sei beispielsweise die Aktivierung des Wirkkettenelemente W1 durch eine Periode Pw1 = 100 ms und einen Offset Ow1 = 60 ms und die Aktivierung eines Wirkkettenelements W2 durch eine Periode Pw2 = 200 ms und Ow2 = 20 ms beschreiben. Seien beispielsweise weiterhin die Aktivierung der Task T1 durch eine Periode Pt1 = 50 ms und einen Offset Ot2 = 10 ms beschreiben. Seien weiterhin W1 und W2 als Wirkkettenelement der Task T1 zugeordnet.

Errechnet werden kann die sich ergebende Periode der Häufigkeitsbeschreibung für die einzelne Wirkkettenelement durch:

$$ PtXwY = PwY / PtX $$

also einer Division der Periode der Aktivierung des Wirkkettenelementes durch die Periode der Aktivierung der Task.

Der Offset der Häufigkeitsbeschreibung kann ebenfalls aus den Aktivierungsbeschreibungen bestimmt werden. Ein Verfahren hierzu ist, den größten gemeinsamen Teiler der Perioden der Aktivierungsbeschreibungen (ggT(PtX,PtY)) zu bestimmen und sodann den Rest der Differenz der Offsets der Aktivierungsbeschreibungen geteilt durch den größten gemeinsame Teiler der Aktivierungsbeschreibungen. Die Bestimmung erfolgt also gemäß der Formel:

$$ OtXwY = (OtX - OwY) \bmod ggT(Ptx, PwY) $$

Im Ergebnis kann W1 als Häufigkeitsbeschreibung eine Periode Pt1w1 = 2 und ein Offset Ot1w1 = 1 zugeordnet werden. W2 wird als Häufigkeitsbeschreibung eine Periode Pt1w2 = 4 und ein Offset Ot1w2 = 0 zugeordnet.

Der verbleibende Offset für w2 von 10 ms kann bei der Kapazitätsberechnung für w2 berücksichtigt werden, d.h. die Kapazität für w2 wird um 10 ms verzögert.

Sind die Perioden nicht durcheinander teilbar, so wird zwar die sich ergebende nicht ganzzahlige Periode verwendet, aber jeweils auf die nächste Instanz aufgerundet. Seien die Periode der Aktivierungsbeschreibung der Task T1 beispielsweise Ptl=80 ms und die Periode der Aktivierungsbeschreibung des T1 zugeordneten Wirkkettenelementes w1 beispielsweise Pw1=200 ms. Daraus ergibt sich eine Periode für die Häufigkeitsbeschreibung von Pt1w1 = Pw1 / Pt1 = 200 ms / 80 ms = 2,5. Die Aktivierung kann allerdings nur in Instanzen der Task und damit für ganzzahlige Vielfache der Perioden der Aktivierungsbeschreibungen der Task berücksichtigt werden. Daher werden die Auftrittszeiten des Wirkkettenelements auf die nächste Instanz der Task gerundet. Im vorliegenden Beispiel wird w1 abwechselnd in jeder 2-ten und jeder 3-ten Instanz der Task tl ausgeführt.

Im folgenden erfolgt eine Beschreibung von Rechenzeiten und Kapazitäten

Die Beschreibung der Kapazität erfolgt über Zeitbeschreibungsmittel.

Vorteilhaft sind dabei Zeitbeschreibungsmittel, welche auf Intervalllängen basieren und mehreren Intervalllängen Bedarfsinformationen zuordnen. Bedarfsinformationen können beispielsweise maximale und/oder minimale Kapazität, also die in einem Intervall mindestens oder maximal verfügbare Rechenzeit sein.

Zeitbeschreibungsmittel können auch Dichten von Ereignissen beschreiben. Vorteilhaft ist wiederum eine auf mehreren Intervalllängen basierende Beschreibung welche teilweise durch eine Zuordnung der Beschreibung zu Bedarfsinformationen erfolgt, wobei die Bedarfsinformationen beispielsweise die maximale Anzahl von Ereignissen, welche in dem zugeordneten Intervall auftreten beschreibt.

Bedarfsinformationen können eine minimale oder maximale Anzahl von Ereignissen, eine minimale oder maximale Menge von Rechenzeit, Verarbeitungskapazität, verfügbare Energie oder ähnliches sein.

Vorteilhaft ist das Zeitbeschreibungsmittel für getrennt für einzelne Tasks und Wirkkettenelemente zu ermitteln. Denkbare Zeitbeschreibungsmittel sind dabei minimale und/oder maximale verfügbare (eingehende) Kapazitäten, minimale und/oder maximale verbleibende (ausgehende) Kapazitäten, minimale und/oder maximale eingehende Ereignisdichten sowie minimale und/oder maximale ausgehende Ereignisdichten.

Zeitbeschreibungsmittel können durch eine Periode, Jitter, Offset, Mindestabstand näher ausgestaltet werden.

Vorteilhafter ist die Ausgestaltung mit auf Intervallen basierenden Zeitbeschreibungsmitteln. Damit ist eine wesentlich genauere Zeitbeschreibung möglich.

Noch vorteilhafter ist eine Kombination aus einer auf Intervallen basierenden Beschreibung mit einer Beschreibung bestehend aus zumindest Offset und Jitter. Noch vorteilhafter ist zusätzlich eine Periode für die Beschreibung zu verwenden. Dies ermöglicht einerseits eine genaue Zeitbeschreibung, andererseits stehen die für die Berücksichtigung von Offsets in der Echtzeitanalyse benötigten Werte zur Verfügung.

Die Erfindung wird anhand der beigefügten Zeichnungen erläutert. Es zeigen:

Fig. 1   ein Beispiel einer Zuordnung von Wirkkettenelementen einer einzigen Wirkkette zu entsprechenden Tasks;

Fig. 2   ein Beispiel einer Zuordnung von Wirkkettenelementen von verschiedenen Wirkketten zu entsprechenden Tasks;

Fig. 3   ein Beispiel ähnlich zu dem von Fig. 1, wobei die Tasks über Zwischenschritte verbunden sind;

Fig. 4   eine Darstellung herkömmlicher Zeitbeschreibungsmittel;

Fig. 5   eine erfindungsgemäße Ausführungsform;

Fig. 6   eine Task, der zwei Wirkkettenelemente zugeordnet sind, welche jeweils unterschiedlichen Wirkketten angehören;

Fig. 7   die Berechnung der maximal verbrauchten Kapazität einer Task aus den maximalen Aktivierungen der Task und der maximal verfügbaren Kapazität der Task; und

Fig. 8   die Verteilung der maximal verbrauchten Kapazität auf zwei Wirkkettenelemente.

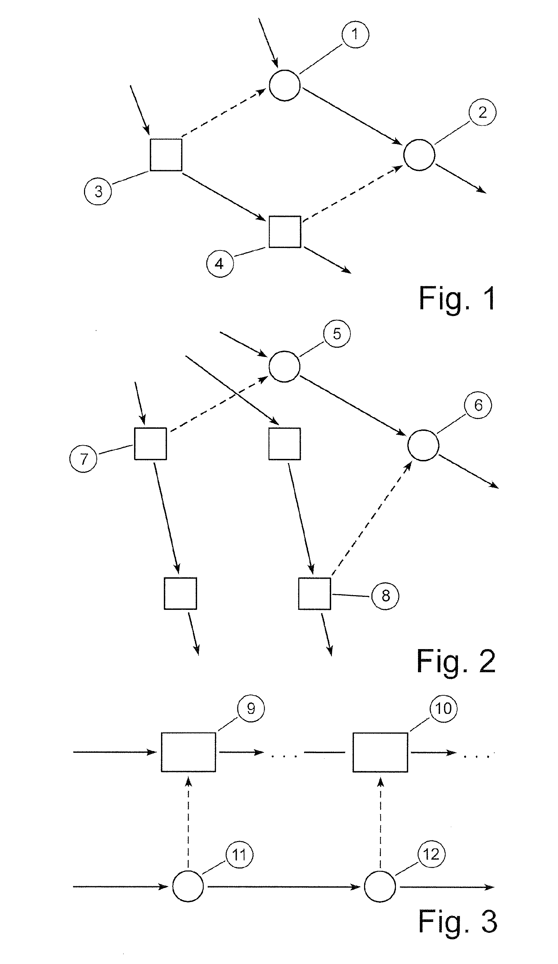

In Fig. 1 sind dargestellt eine erste Task, 1 welche eine zweite Task 2 aktiviert, wobei Task 1 selbst aktiviert wird und Task 2 weitere Tasks aktiviert. Der ersten Task 1 ist ein erstes Wirkkettenelement 3 zugeordnet, der zweiten Task 2 ist ein zweites Wirkkettenelement 4 zugeordnet, wobei Task 1 und Task 2 einer Wirkkette angehören und die Daten der Wirkkette zunächst durch Wirkkettenelement 3 verarbeitet werden und danach durch Wirkkettenelement 4 weiterverarbeitet werden.

In Fig. 2 sind die Tasks 5 und 6 dargestellt, wobei die Task 5 die Task 6 aktiviert. Weiterhin sind zwei Wirkketten dargestellt, wobei das Wirkkettenelement 7, welches der Task 5 zugeordnet ist, Teil der einen Wirkkette ist und das Wirkkettenelement 8, welches der Task 6 zugeordnet ist, Teil der anderen Wirkkette ist.

In Fig. 3 sind zwei Task 9 und 10 dargestellt, wobei Task 10 über mehrere Zwischenschritte hinweg von Task 9 aktiviert wird. Der Task 9 ist das Wirkkettenelement 11 zugeordnet und Task 10 das Wirkkettenelement 12, wobei die Daten der Wirkkette zunächst im Wirkkettenelement 11 verarbeitet und danach im Wirkkettenelement 12 weiterverarbeitet werden.

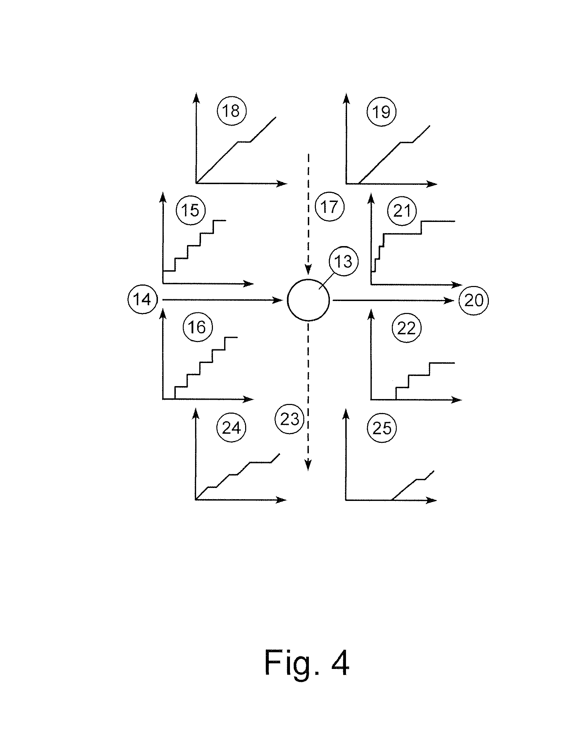

In Fig. 4 ist eine Task 13 zu sehen, welche aktiviert wird (Bezugszeichen 14) und andere Task aktiviert (Bezugszeichen 15) mit den für die Echtzeitanalyse gegebenen und berechneten Zeitbeschreibungsmittel. Bezugszeichen 17 stellt die für die Task verfügbare Kapazität und Bezugszeichen 23 die nach der Task noch verbleibende Kapazität dar. Jedes dargestellte Diagramm ((15), (16), (18), (19), (21), (22), (24), (25)) ist die Darstellung eines Zeitbeschreibungsmittels. Dabei ist die x-Achse Zeitintervalle, die y-Achse Kosten in Form von (angeforderter, verfügbarer, verbrauchter) Rechenzeit bzw. Anzahl von Ereignissen.

Dabei stellt Diagramm (15) die maximale Aktivierung der Task 13 und Diagramm (16) die minimale Aktivierung dar. Diagramm (18) stellt die maximal für die Task 13 verfügbare Kapazität und Diagramm (19) die minimal für die Task verfügbare Kapazität dar. Aus diesen Werten werden (zusammen mit den Rechenzeiten der Task) die von der Task ausgehenden Aktivierungen gemäß Diagramm (20) und die noch verbleibende Kapazität gemäß Diagramm (23) von der Echtzeitanalyse ermittelt. Dabei stellt Diagramm (21) die maximalen ausgehenden Aktivierungen und Diagramm (22) die minimalen ausgehenden Aktivierungen dar. Diagramm (24) stellt die maximal verbleibende Kapazität und Diagramm (25) die minimal (mindestens) verbleibende Kapazität dar.

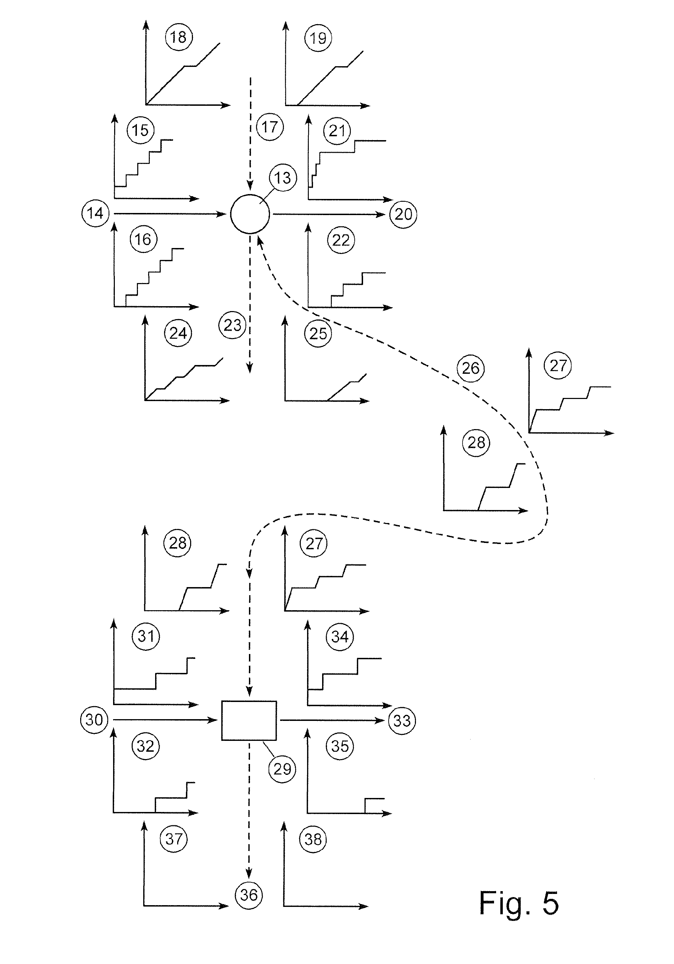

In Fig. 5 wird der Gegenstand der Erfindung anhand einer Erweiterung der Fig. 4 dargestellt.

Hinzugekommen ist ein Wirkkettenelement 29 mit maximal verfügbarer Kapazität gemäß Diagramm (27) und minimal verfügbarer Kapazität gemäß Diagramm (28), der Bereitstellung von Daten (Bezugszeichen 30) für das Wirkkettenelement 29 und die Bereitstellung von Daten (Bezugszeichen 33) durch das Wirkkettenelement 29 für das nachfolgende Wirkkettenelement (nicht mehr dargestellt). Diagramme (31) und (32) zeigen die maximale bzw. minimale Bereitstellungsrate von Daten für (33), Diagramme (34) und (35) die minimale bzw. maximale Bereitstellungsrate von Daten durch (33) für ein Nachfolgerwirkkettenelement. Diagramme (37) und (38) geben die minimale bzw. maximale nach dem Wirkkettenelement 29 verbleibende Kapazität dar. Diese sollte idealerweise jeweils für alle Intervall 0 sein.

Als Element der Erfindung sind mit Bezugszeichen 26 die maximal (27) bzw. minimal (28) von der Task 13 verbrauchte Kapazität dargestellt. Sie kann erfindungsgemäß im Idealfall als verfügbare Kapazität für das Wirkkettenelement 29 interpretiert und verwendet werden.

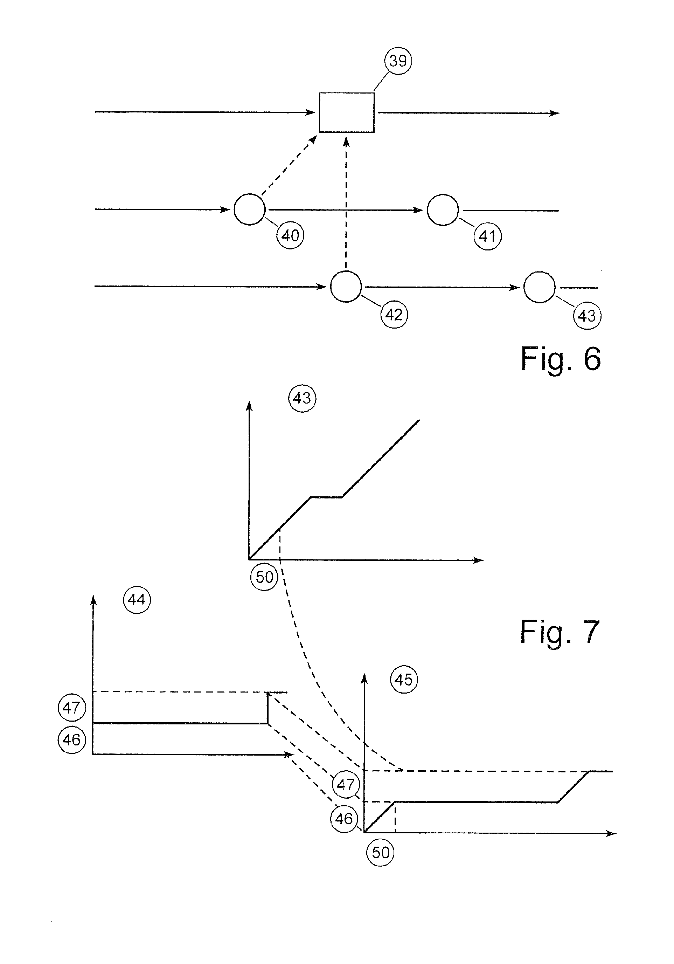

In Fig. 6 wird eine Task 39 dargestellt, der zwei Wirkkettenelemente 40, 42 zugeordnet sind, welche jeweils unterschiedlichen Wirkketten angehören.

In Fig. 7 wird die Berechnung der maximal verbrauchten Kapazität gemäß Diagramm (45) einer Task (bzw. der verfügbaren Kapazität für ein Wirkkettenelement) aus den maximalen Aktivierungen der Task gemäß Diagramm (44) und der maximal verfügbaren Kapazität gemäß Diagramm (43) der Task dargestellt. Zu sehen ist, dass nur ein Teil der verfügbaren Kapazität in die verbrauchte Kapazität übergeht (Bezugszeichen 50) bzw. das jede Aktivierung der Task sich in der verbrauchten Kapazität niederschlägt (Bezugszeichen 46, 47) aber teilweise wegen keiner oder begrenzter verfügbarer Kapazität verzögert wird.

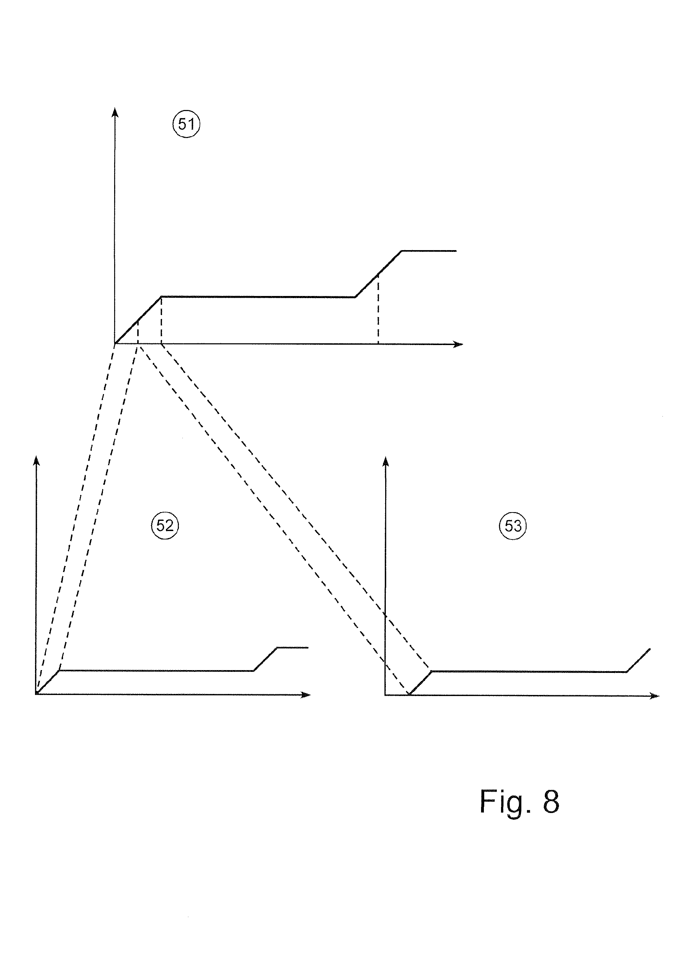

In Fig. 8 wird die Verteilung der maximal verbrauchten Kapazität (Diagramm (51)) auf zwei Wirkkettenelemente dargestellt. Zu sehen sind dabei die resultierenden maximal verfügbaren Kapazitäten der beiden Wirkkettenelemente (52), (53). Jedem Wirkkettenelement wird ein Teil der verbrauchten Kapazität der Task als verfügbare Kapazität zugewiesen. Dabei sind hier die x-Achsen der Kapazitäten im Zeitbereich dargestellt um den Offset zu verdeutlichen.

Obwohl die Erfindung mittels der Figuren und der zugehörigen Beschreibung dargestellt und detailliert beschrieben ist, sind diese Darstellung und diese detaillierte Beschreibung illustrativ und beispielhaft zu verstehen und nicht als die Erfindung einschränkend. Es versteht sich, dass Fachleute Änderungen und Abwandlungen machen können, ohne den Umfang der folgenden Ansprüche zu verlassen. Insbesondere umfasst die Erfindung ebenfalls Ausführungsformen mit jeglicher Kombination von Merkmalen, die vorstehend zu verschiedenen Aspekten und/oder Ausführungsformen genannt oder gezeigt sind.

Die Erfindung umfasst ebenfalls einzelne Merkmale in den Figuren auch wenn sie dort im Zusammenhang mit anderen Merkmalen gezeigt sind und/oder vorstehend nicht genannt sind.

Im Weiteren schließt der Ausdruck "umfassen" und Ableitungen davon andere Elemente oder Schritte nicht aus. Ebenfalls schließt der unbestimmte Artikel "ein" bzw. "eine" und Ableitungen davon eine Vielzahl nicht aus. Die Funktionen mehrerer in den Ansprüchen aufgeführter Merkmale können durch eine Einheit erfüllt sein. Die Begriffe "im Wesentlichen", "etwa", "ungefähr" und dergleichen in Verbindung mit einer Eigenschaft beziehungsweise einem Wert definieren insbesondere auch genau die Eigenschaft beziehungsweise genau den Wert. Alle Bezugszeichen in den Ansprüchen sind nicht als den Umfang der Ansprüche einschränkend zu verstehen.

**Patentansprüche**

1. Verfahren zur Analyse des zeitlichen Verhaltens von eingebetteten Systemen,
   wobei das eingebettete System mehrere Verarbeitungsschritte (Tasks) aufweist,
   wobei durch die Verarbeitungsschritte zumindest teilweise Daten verarbeitet werden, wobei die Verarbeitung mindestens eines Datums durch mehrere Verarbeitungsschritte erfolgt,
   wobei zumindest zwei dieser Verarbeitungsschritte eine feste Reihenfolge haben,
   wobei mindestens einer Task ein Wirkkettenelement zugeordnet wird, wobei Tasks den Kontrollfluss und das Wirkkettenelement den Datenfluss repräsentieren,
   wobei mindestens einem ersten Wirkkettenelement W1 (Vorgängerwirkkettenelement) ein zweites Wirkkettenelement W2 (Nachfolgerwirkkettenelement) zugeordnet wird, wobei die Zuordnung den Datenfluss vom Vorgängerwirkkettenelement zum Nachfolgerwirkkettenelement modelliert,
   wobei mindestens zwei Tasks T1, T2 jeweils mindestens ein Wirkkettenelement W1, W2 zugeordnet wird,
   **gekennzeichnet durch** die Schritte,
   Bestimmung von Zeitbeschreibungsmitteln für die von Task T1 verbrauchte Kapazität für mindestens ein Zeitintervall I,
   wobei Zeitbeschreibungsmittel für die eingehende Kapazität von Task T1 und Zeitbeschreibungsmittel für die eingehenden Aktivierungen von Task T1 verwendet werden, und Bestimmung von Zeitbeschreibungsmittel für die eingehende Kapazität von Wirkkettenelement W1 von Task T1 für mindestens ein Zeitintervall I', wobei hierfür die Zeitbeschreibungsmittel für die verbrauchte Kapazität von Task T1 verwendet werden.

2. Verfahren nach Anspruch 1, ferner mit einem Schritt Bestimmung von Zeitbeschreibungsmitteln für die Bereitstellung neuer Daten für Wirkkettenelement W2 von Task 2 unter Verwendung von Zeitbeschreibungsmitteln für die Bereitstellung von Daten für Wirkkettenelement W1 und Zeitbeschreibungsmittel für die eingehende Kapazität von W1.

3. Verfahren nach Anspruch 1 oder 2, wobei mindestens einer Task mindestens zwei Wirkkettenelemente zugeordnet sind und Zeitbeschreibungsmittel für zumindest diese Wirkkettenelemente gemäß dem Verfahren von Anspruch 1 bestimmt werden, wobei mindestens beiden Wirkkettenelementen jeweils ein Teil der von der Task verbrauchten Kapazität als verfügbare Kapazität zugeordnet wird.

4. Verfahren nach einem der vorhergehenden Ansprüche, wobei die Zeitbeschreibungsmittel für die für Wirkkettenelement W1 verfügbare Kapazität für mindestens ein Zeitintervall I' bestimmt werden.

5. Verfahren nach einem der vorhergehenden Ansprüche, wobei mindestens einer ersten Task T1 (1), die eine Vorgängertask darstellt, eine zweite Task T2 (2) als Nachfolgertask zugeordnet ist, womit eine Aktivierung der Nachfolgertask durch die Vorgängertask modelliert wird, wobei der Task T1 mindestens ein Wirkkettenelement W1 und der Task T2 mindestens ein Wirkkettenelement W2 zugeordnet wird.

6. Verfahren nach einem der vorherigen Ansprüche, wobei mindestens ein Wirkkettenelement asynchron aktiviert wird.

7. Verfahren nach einem der vorherigen Ansprüche, wobei mindestens eine Wirkkette Wk mit mindestens zwei Wirkkettenelementen W1 und W2 vorgesehen ist, wobei Wirkkettenelement W1 als Vorgänger von Wirkkettenelement W2 in der Wirkkette Wk ausgestaltet ist, wobei Wirkkettenelement W1 einer Task T1 zugeordnet und Wirkkettenelement W2 einer Task T2 zugeordnet ist und T1 nicht T2 zugeordnet ist.

8. Verfahren nach einem der vorhergehenden Ansprüche, wobei für mindestens eine Wirkkette eine Antwortzeit bestimmt wird, wobei vorzugsweise für mindestens eine Wirkkette sowohl eine maximale als auch eine minimale Antwortzeit bestimmt wird.

9. Verfahren nach einem der vorhergehenden Ansprüche, wobei einer Task neben Wirkkettenelementen zusätzliche Abschnitte zugeordnet sind und diese Abschnitte sonstigen Kapazitätsverbrauch der Task beschreiben, Wobei vorzugsweise mindestens einem Abschnitt einer Task eine Häufigkeitsbeschreibung zugeordnet wird.

10. Verfahren nach einem der vorhergehenden Ansprüchen bei denen mindestens zwei zu einer Task zugeordneten Wirkkettenelementen und/oder Abschnitten eine Reihenfolge zugewiesen ist.

11. Verfahren nach Anspruch 9, wobei ein Wirkkettenelement W1 einer Task T1 zugeordnet ist, mit einem Schritt Bestimmung der Häufigkeitsbeschreibung für W1 unter Verwendung der Aktivierungsbeschreibungen von W1 und T1.

12. Verfahren nach einem der vorhergehenden Ansprüche, wobei mindestens ein Häufigkeitsbeschreibungsmittel mit mindestens einer Periode, mit einem Offset, mit einer Periode und einem Offset, und/oder mit einer intervallbasieren Beschreibung ausgestaltet ist.

13. Verfahren nach einem der vorherigen Ansprüche, wobei mindestens ein Zeitbeschreibungsmittel mit einer auf Intervallen basierenden Beschreibung ausgestaltet ist oder mindestens ein Zeitbeschreibungsmittel mit einer auf Intervallen basierenden Beschreibung ausgestaltet ist welche für mindestens zwei Intervalle Bedarfsinformationen beinhaltet.

14. Verfahren nach einem der vorherigen Ansprüche, wobei Bedarfsinformationen teilweise (a) als Menge von Ereignissen, (b) als Rechenzeit, (c) als minimale Menge von Ereignissen, (d) als minimale Rechenzeit, (e) als maximale Menge von Ereignissen, und/oder (f) als maximale Rechenzeit ausgestaltet sind.

15. Verfahren nach einem der vorherigen Ansprüche, wobei mindestens ein Zeitbeschreibungsmittel mit einer (a) auf Intervallen basierenden Beschreibung als auch mit einem Offset, (b) auf Intervallen basierenden Beschreibung als auch mit einem Offset und einer Periode, und/oder (c) auf Intervall basierenden Beschreibung als auch mit einem Offset, einer Periode und einen Jitter ausgestaltet ist.

Fig. 1

Fig. 2

Fig. 3

Fig. 4

Fig. 5

Fig. 6

Fig. 7

Fig. 8

**EP 2 354 949 A1**

Europäisches Patentamt

European Patent Office

Office européen des brevets

## EUROPÄISCHER RECHERCHENBERICHT

**Nummer der Anmeldung**

EP 10 15 2107

### EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| X | T. Kramer, Dr. R. Münzenberger: "New Functions, New Sensors, New Architectures ? How to Cope with the Real-Time Requirements" Bd. -, Nr. -, Mai 2009 (2009-05), Seiten 1-9, XP002583703 Gefunden im Internet: URL:http://www.inchron.com/fileadmin/INCHRON/3-PDFs/EN/AMAA_09_INCHRON_Manuscript_sent.pdf> * das ganze Dokument * & NN: "INCHRON Papers" - Bd. -, Nr. -, 2010, Gefunden im Internet: URL:http://www.inchron.de/index.php?id=42&L=0> ----- | 1-15 | INV. G06F11/36 G06F9/48 G06F17/50 |
| X | Tapio Kramer,Dr. Ralf Münzenberger: "Echtzeitverhalten simulieren und validieren - verstehen und absichern" Oktober 2009 (2009-10), Seiten 1-9, XP002583704 Gefunden im Internet: URL:http://www.inchron.com/fileadmin/INCHRON/3-PDFs/DE/Embedded-System-Entwicklung_09_INCHRON.pdf> * das ganze Dokument * ----- -/-- | 1-15 | **RECHERCHIERTE SACHGEBIETE (IPC)** G06F |

Der vorliegende Recherchenbericht wurde für alle Patentansprüche erstellt

| Recherchenort | Abschlußdatum der Recherche | Prüfer |
|---|---|---|
| Den Haag | 25. Mai 2010 | Kielhöfer, Patrick |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus anderen Gründen angeführtes Dokument
...............................................................................
& : Mitglied der gleichen Patentfamilie, übereinstimmendes Dokument

EPO FORM 1503 03.82 (P04C03)

15

Europäisches
Patentamt

European
Patent Office

Office européen
des brevets

**EUROPÄISCHER RECHERCHENBERICHT**

Nummer der Anmeldung

EP 10 15 2107

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| A | T. Komarek,M. Dörfel,R. Münzenberger: "Developing Real-Time Constrained Embedded Software Using Task Models"<br><br>Januar 2007 (2007-01), Seiten 1-6, XP002583705<br>Gefunden im Internet:<br>URL:http://www.inchron.com/fileadmin/INCHRON/3-PDFs/EN/INCHRON-aae2007-Embedded_Software_Using_Task_Models_070124.pdf><br>* das ganze Dokument *<br>----- | 1-15 | |
| A | GAUTIER T ET AL: "Signal: a declarative language for synchronous programming of real-time systems"<br>INRIA RAPPORTS DE RECHERCHE - RESEARCH REPORT, INRIA, LE CHESNAY, FR, Nr. 761,<br>1. November 1987 (1987-11-01), Seiten 1-23, XP002303488<br>ISSN: 0249-6399<br>* das ganze Dokument *<br>----- | 1-15 | |

RECHERCHIERTE
SACHGEBIETE (IPC)

Der vorliegende Recherchenbericht wurde für alle Patentansprüche erstellt

| Recherchenort | Abschlußdatum der Recherche | Prüfer |
|---|---|---|
| Den Haag | 25. Mai 2010 | Kielhöfer, Patrick |

KATEGORIE DER GENANNTEN DOKUMENTE

X : von besonderer Bedeutung allein betrachtet
Y : von besonderer Bedeutung in Verbindung mit einer
    anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder
    nach dem Anmeldedatum veröffentlicht worden ist
D : in der Anmeldung angeführtes Dokument
L : aus anderen Gründen angeführtes Dokument
...........................................................................................
& : Mitglied der gleichen Patentfamilie, übereinstimmendes
    Dokument

EPO FORM 1503 03.82 (P04C03)

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- WO 2008003427 A